# EUROPEAN PATENT SPECIFICATION

(11) **EP 2 564 289 B1**
(45) Date of publication and mention of the grant of the patent: **30.12.2020**
(21) Application number: 11774507.5
(22) Date of filing: 19.04.2011
(51) Int. Cl.: G06F 3/01, G06F 3/0482, G06F 3/0488

(54) **AN APPARATUS, METHOD, COMPUTER PROGRAM AND USER INTERFACE**
VORRICHTUNG, VERFAHREN, COMPUTERPROGRAMM UND BENUTZERSCHNITTSTELLE
APPAREIL, PROCÉDÉ, PROGRAMME INFORMATIQUE ET INTERFACE UTILISATEUR

(30) Priority: 26.04.2010 US 767349
(43) Date of publication of application: 06.03.2013
(73) Proprietor: Nokia Technologies Oy, 02610 Espoo (FI)
(72) Inventor: COLLEY, Ashley, FI-90800 Oulu (FI)
(74) Representative: Swindell & Pearson Limited
(86) International application number: PCT/IB2011/051695
(87) International publication number: WO 2011/135488

(56) References cited:
- WO-A1-03/050754
- US-A1- 2004 017 376
- US-A1- 2007 152 982
- US-A1- 2007 247 420
- US-A1- 2008 010 593
- US-A1- 2009 002 140
- US-A1- 2009 015 560
- US-A1- 2009 128 376
- US-A1- 2009 128 503
- US-A1- 2009 128 503
- US-A1- 2009 315 832
- US-A1- 2010 053 078
- US-A1- 2010 088 654
- US-A1- 2010 097 323

## Description

### FIELD OF THE INVENTION

Embodiments of the present invention relate to an apparatus, method, computer program and user interface. In particular, they relate to an apparatus, method, computer program and user interface which is simple and convenient for a user to use.

### BACKGROUND TO THE INVENTION

Apparatus which enable a user to make inputs via a user input device are well known. The apparatus may be configured to perform a plurality of different functions or store a plurality of different pieces of information. It is useful to make the apparatus easy for a user to use to reduce the number of inadvertent actuations while still enabling easy and convenient access to the functions of the apparatus.

US 2009/0015560 A1 discloses a device that includes a controllable skin texture surface, a non-keypad display, and control logic, the non-keypad display displays non-keypad information representing at least one selectable element. The selectable element represents additional display information. The control logic is operatively coupled to the non-keypad display and the controllable skin texture surface. The control logic controls at least a portion of the controllable skin texture surface to protrude at a location corresponding to the selectable element to provide a protruding selectable element. In one example, the device includes a sensor. The sensor is operatively coupled to the control logic. The sensor senses a user activating the selectable element. The control logic controls the non-keypad display to display the additional information in response to the sensor sensing the user activating the selectable element.

US 2009/0128376 A1 discloses a device that includes a controllable skin texture defining a keypad, a sensor, and control logic. The sensor senses a proximity of a pointing element to a particular key of the keypad based on a user input. The control logic adjusts a height of the particular key with respect to another key of the keypad in response to the sensor sensing the proximity of the pointing element to the particular key. In one example, the device includes a display for displaying a plurality of keys. The control logic adjusts visual characteristics of the particular key and an adjacent key with respect to each other and with respect to other keys of the plurality of keys in response to the sensor sensing the proximity of the pointing element to the particular key.

US 2008/0010593 A1 discloses a haptic/tactile input in which the behavior and/or appearance of the mechanical user interface input is configured to be adapted to the function and context of an electronic device to give feedback and cues to the user. The mechanical input for example, buttons, sliders, levers, and other input devices are made appear on the surface of the user interface when needed.

US 2007/0152982 A1 discloses an input device for adaptively providing various input modes and providing a clicking feeling to a user by controlling the stiffness of a button pressed by the user is provided. The input device includes a contact surface (physically) contacting a user, an actuator providing a displacement or a force to the contact surface, and an electric circuit controlling the operation of the actuator.

US 2010/0053078 A1 discloses a movement control method and system of a terminal input unit having a plurality of protrusions. Exemplary embodiments disclose a process and an apparatus for controlling each protrusion so that the input unit forms interface modes used for a function control according to a user function of the terminal.

US 2009/0315832 A1 discloses an electronic device including an interactive display having an interactive mode and a non-interactive mode. The interactive display includes an image display device that displays a user-interactive imaged keypad in at least a portion of the image display device when the interactive display is in the interactive mode and that displays other image data in the at least a portion of the image display device when the interactive display is in the non-interactive mode, and a substantially transparent physical keypad that provides tactile feedback to a user indicating location of one or more imaged keys within the imaged keypad in response to one or more actuators disposed below the image display device.

US 2009/0002140 A1 discloses a method and system of an embodiment which may include a system comprising a touch screen display panel, and a tactile panel with one or more raised surfaces wherein the touch screen display panel is positioned on top of the tactile panel and the tactile panel creates one or more raised surfaces on the touch screen display panel providing tactile information to a user of the touch screen display panel.

US 2010/0088654 A1 discloses an electronic device having a touchscreen display. A graphical user interface is displayed on the touchscreen display that includes a user interface element displayed in a default state at a location, the user interface element being associated with a function. The user interface element is changed from the default state to a first state upon detecting a first input event at the location. The user interface element is changed from the first state to a second state upon detecting a second input event at the location.

US 2004/0017376 A1 discloses an apparatus and method for a communication device having a display for graphically organizing communication patterns of the user. Visual attributes of the images associated with specific parties are varied dynamically as the communication patterns of the user with specific parties change.

US 2009/0128503 A1 discloses a method and apparatus for an electronic interface device capable of providing a fixed relief touch screen with locating features using deformable haptic surfaces are disclosed. The device, in one embodiment, includes a haptic mechanism and a touch-sensitive surface. The haptic mechanism provides haptic feedback in response to an activating command. The touch-sensitive surface is capable of changing its surface texture from a first surface characteristic to a second surface characteristic in response to the haptic feedback. For example, the first surface characteristic may be coarse texture while the second surface characteristic may be smooth texture.

US 2007/0247420 discloses a button configuration that includes a shape-changing button that has a central region and a peripheral region. The peripheral region encircles the central region and defines a surface plane. The shape-changing button has an active state and an inactive state. The central region of the button protrudes from the surface plane and provides a push button function when the button is in the active state. The central region of the button extends substantially in the surface plane and provides no push button function when the button is in the inactive state. A control panel having shape-changing buttons is also provided.

### BRIEF DESCRIPTION OF VARIOUS EMBODIMENTS OF THE INVENTION

The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to various, but not necessarily all, examples of the disclosure there is provided an apparatus comprising: a user input device; at least one processor; and at least one memory including computer program code; wherein the at least one memory and the computer program code are configured to, with the at least one processor, enable the apparatus to: provide a user selectable part of the user input device; configure the apparatus in either a first state or a second state wherein, in the first state the user selectable part is associated with a first function, having a first characteristic, so that the first function is performed in response to actuation of the user selectable part and in the second state the user with the first function so that the first function is not performed in response to the actuation of the user selectable part; and configure the apparatus to control a tactile quality of the user selectable part with respect to the rest of the user input device so that the user selectable part is provided with a first tactile quality when the apparatus is in the first state and a second tactile quality when the apparatus is in the second state wherein the tactile quality is indicative of the first characteristic of the first function.

In some examples of the disclosure the tactile quality may be the height of the user selectable part with respect to the rest of the user input device so that the user selectable part may be provided at a first relative height when the apparatus is in the first state and a second relative height when the apparatus is in the second state wherein the relative height is indicative of the first characteristic of the first function.

In some examples of the disclosure the first relative height may be higher than the rest of the user input device. In other examples of the disclosure the first relative height may be lower than the rest of the user input device.

In some examples of the disclosure the tactile quality may be the texture of the user selectable part.

In some examples of the disclosure the first characteristic may be that the function is available. In other examples of the disclosure the first characteristic may be that the function comprises committing to a transaction. Committing to a transaction may comprise performing an action which cannot easily be reversed.

In some examples of the disclosure the first characteristic may be the probability that the function will be selected.

In some examples of the disclosure the tactile quality of the user selectable part may be proportional to the probability that the function will be selected.

In some examples of the disclosure the first characteristic associated with the first function may be dependent upon the context of the apparatus.

In some examples of the disclosure a plurality of user selectable parts may be provided. Each of the user selectable parts may be provided with different tactile qualities depending on the characteristics of the functions associated with the user selectable parts.

In some examples of the disclosure the change in the tactile quality of a part of the user input device may be provided by a change in the topology of an electroactive polymer.

According to various, but not necessarily all, examples of the disclosure there is also provided a method comprising: providing a user selectable part of a user input device of an apparatus; configuring the apparatus in either a first state or a second state wherein, in the first state the user selectable part is associated with a first function, having a first characteristic, so that the first function is performed in response to actuation of the user selectable part and in the second state the user selectable part is not associated with the first function so that the first function is not performed in response to the actuation of the user selectable part; and controlling a tactile quality of the user selectable part with respect to the rest of the user input device so that the user selectable part is provided with a first tactile quality when the apparatus is in the first state and a second tactile quality when the apparatus is in the second state wherein the tactile quality is indicative of the first characteristic of the first function.

In some examples of the disclosure the tactile quality may be the height of the user selectable part with respect to the rest of the user input device so that the user selectable part may be provided at a first relative height when the apparatus is in the first state and a second relative height when the apparatus is in the second state wherein the relative height is indicative of the first characteristic of the first function.

In some examples of the disclosure the first relative height may be higher than the rest of the user input device. In other examples of the disclosure the first relative height may be lower than the rest of the user input device.

In some examples of the disclosure the tactile quality may be the texture of the user selectable part.

In some examples of the disclosure the first characteristic may be that the function is available. In other examples of the disclosure the first characteristic may be the probability that the function will be selected. The tactile quality of the user selectable part may be proportional to the probability that the function will be selected.

In some examples of the disclosure the first characteristic may be that the function comprises committing to a transaction. Committing to a transaction may comprise performing an action which cannot easily be reversed.

In some examples of the disclosure the first characteristic associated with the first function may be dependent upon the context of the apparatus.

In some examples of the disclosure the method may also comprise providing a plurality of user selectable parts. Each of the user selectable parts may be provided with different tactile qualities depending on the characteristics of the functions associated with the user selectable parts.

In some examples of the disclosure the change in the tactile quality of a part of the user input device may be provided by a change in the topology of an electroactive polymer.

According to various, but not necessarily all, examples of the disclosure there is also provided a computer program comprising computer program instructions that, when executed by at least one processor, enable an apparatus at least to perform: providing a user selectable part of a user input device of the apparatus; configuring the apparatus in either a first state or a second state wherein, in the first state the user selectable part is associated with a first function, having a first characteristic, so that the first function is performed in response to actuation of the user selectable part and in the second state the user selectable part is not associated with the first function so that the first function is not performed in response to the actuation of the user selectable part; and controlling the tactile quality of the user selectable part with respect to the rest of the user input device so that the user selectable part is provided with a first tactile quality when the apparatus is in the first state and a second tactile quality when the apparatus is in the second state wherein the tactile quality is indicative of the first characteristic of the first function.

In some examples of the disclosure there may also be provided a computer program comprising program instructions for causing a computer to perform the method as described above.

In some examples of the disclosure there may also be provided a physical entity embodying the computer program as described above.

In some examples of the disclosure there may also be provided an electromagnetic carrier signal carrying the computer program as described above.

According to various, but not necessarily all, examples of the disclosure there is also provided a user interface comprising: a user input device wherein the user input device comprises a user selectable part wherein, in a first state the user selectable part is associated with a first function, having a first characteristic, so that the first function is performed in response to actuation of the user selectable part and in a second state the user selectable part is not associated with the first function so that the first function is not performed in response to the actuation of the user selectable part; and the tactile quality of the user selectable part with respect to the rest of the user input device may be controlled so that the user selectable part is provided with a first tactile quality when the apparatus is in the first state and a second tactile quality when the apparatus is in the second state wherein the relative tactile quality is indicative of the first characteristic of the first function.

In some examples of the disclosure the first characteristic associated with the first function may be dependent upon the context of the apparatus.

In some examples of the disclosure the tactile quality may be the height of the user selectable part with respect to the rest of the user input device so that the user selectable part may be provided at a first relative height when the apparatus is in the first state and a second relative height when the apparatus is in the second state wherein the relative height is indicative of the first characteristic of the first function.

In some examples of the disclosure the first relative height may be higher than the rest of the user input device. In other examples of the disclosure the first relative height may be lower than the rest of the user input device.

According to various, but not necessarily all, examples of the disclosure there is also provided an apparatus comprising: means for providing a user selectable part of a user input device of an apparatus; means for configuring the apparatus in either a first state or a second state wherein, in the first state the user selectable part is associated with a first function, having a first characteristic, so that the first function is performed in response to actuation of the user selectable part and in the second state the user selectable part is not associated with the first function so that the first function is not performed in response to the actuation of the user selectable part; and means for controlling a tactile quality of the user selectable part with respect to the rest of the user input device so that the user selectable part is provided with a first tactile quality when the apparatus is in the first state and a second tactile quality when the apparatus is in the second state wherein the tactile quality is indicative of the first characteristic of the first function.

The apparatus may be for wireless communication.

### BRIEF DESCRIPTION OF THE DRAWINGS

For a better understanding of various examples of embodiments of the present invention reference will now be made by way of example only to the accompanying drawings in which:
Fig. 1 schematically illustrates an apparatus according to an exemplary embodiment of the invention;
Fig. 2 illustrates a touch sensitive display configured to provide a tactile indication according to an exemplary embodiment of the invention;
Fig. 3 illustrates a touch sensitive display configured to provide a tactile indication according to a second exemplary embodiment of the invention;
Fig. 4A is a block diagrams which schematically illustrates a method according to an exemplary embodiment of the invention;
Figs. 5A to 5B illustrate an exemplary embodiment of the invention in use;
Figs. 6A to 6B illustrate another exemplary embodiment of the invention in use; and
Fig. 7 illustrates a further exemplary embodiment of the invention in use.

### DETAILED DESCRIPTION OF VARIOUS EMBODIMENTS OF THE INVENTION

The Figures illustrate an apparatus 1, method, computer program and apparatus wherein the apparatus 1 comprises: a user input device 17; at least one processor 3; and at least one memory 5 including computer program code 9; wherein the at least one memory 5 and the computer program code 9 are configured to, with the at least one processor 3, enable the apparatus 1 to: provide a user selectable part 51 of the user input device 1; configure the apparatus 1 in either a first state or a second state wherein, in the first state the user selectable part 51 is associated with a first function, having a first characteristic, so that the first function is performed in response to actuation of the user selectable part 51 and in the second state the user selectable part 51 is not associated with the first function so that the first function is not performed in response to the actuation of the user selectable part 51; and configure the apparatus 1 to control the tactile quality of the user selectable part 51 with respect to the rest of the user input device 17 so that the user selectable part 51 is provided with a first tactile quality when the apparatus is in the first state and a second tactile quality when the apparatus 1 is in the second state wherein the tactile quality is indicative of the first characteristic of the first function.

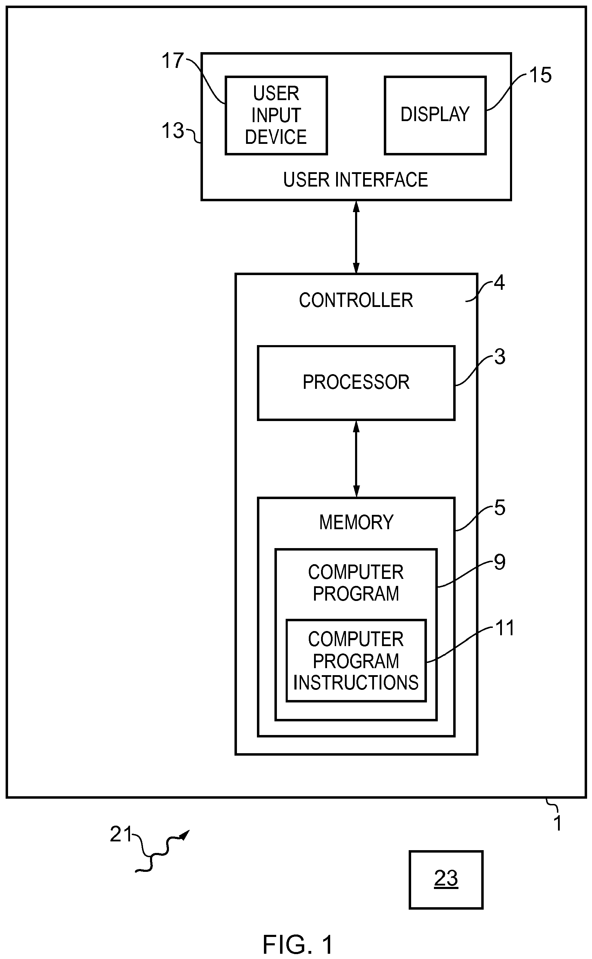

Fig. 1 schematically illustrates an apparatus 1 according to an exemplary embodiment of the invention. The apparatus 1 may be an electronic apparatus. The apparatus 1 may be, for example, a mobile cellular telephone, a personal computer, a camera, a gaming device, a personal digital assistant, a personal music player or any other apparatus which enables a user to make user inputs to control the apparatus 1. The apparatus 1 may be a handheld apparatus 1 which can be carried in a user's hand, handbag or jacket pocket for example.

Only features referred to in the following description are illustrated in Fig. 1. However, it should be appreciated that the apparatus 1 may comprise additional features that are not illustrated. For example, in embodiments of the invention where the apparatus 1 is a mobile cellular telephone, the apparatus 1 may also comprise a transmitter and receiver configured to enable wireless communication.

The apparatus 1 illustrated in Fig. 1 comprises: a user interface 13 and a controller 4. In the illustrated embodiment the controller 4 comprises at least one processor 3 and at least one memory 5 and the user interface 13 comprises a display 15 and a user input device 17.

The controller 4 provides means for controlling the apparatus 1. The controller 4 may be implemented using instructions that enable hardware functionality, for example, by using executable computer program instructions 11 in one or more general-purpose or special-purpose processors 3 that may be stored on a computer readable storage medium 23 (e.g. disk, memory etc) to be executed by such processors 3.

The controller 4 may be configured to control the apparatus 1 to perform a plurality of different functions. For example, where the apparatus 1 is a mobile cellular telephone the controller 4 may be configured to control the apparatus 1 to make and receive telephone calls and also to perform other functions such as send messages or access communication networks such as local area networks or the internet. The controller 4 may also be configured to enable a user to commit to a transaction. Committing to a transaction may comprise performing an action that cannot easily be reversed. Such an action may be, for example, authorising a payment, sending a message such as an email, deleting content from the one or more memories 5 or transferring content to a removable medium, for example, burning a CD.

The controller 4 may also be configured to enable the apparatus 1 to provide a user selectable part 51 of the user input device 17; configure the apparatus 1 in either a first state or a second state wherein, in the first state the user selectable part 51 is associated with a first function, having a first characteristic, so that the first function is performed in response to actuation of the user selectable part 51 and in the second state the user selectable part 51 is not associated with the first function so that the first function is not performed in response to the actuation of the user selectable part 51; and configure the apparatus 1 to control the tactile quality of the user selectable part 51 with respect to the rest of the user input device so that the user selectable part 51 is provided with a first tactile quality when the apparatus 1 is in the first state and a second tactile quality when the apparatus 1 is in the second state wherein the tactile quality is indicative of the first characteristic of the first function.

The at least one processor 3 is configured to receive input commands from the user interface 13 and also to provide output commands to the user interface 13. The at least one processor 3 is also configured to write to and read from the at least one memory 5. The outputs of the user interface 13 are provided as inputs to the controller 4.

In the exemplary embodiment illustrated in Fig. 1 the user interface 13 comprises a user input device 17 and a display 15.

The user input device 17 may comprise any means which enables a user of the apparatus 1 to input information which may be used to control the apparatus 1. The user input device 17 may also enable a user to input information which may be stored in the one or more memories 5 of the apparatus 1. The user input device 17 may comprise a touch sensitive display, a keypad or a combination of a number of different types of user input devices.

In embodiments of the invention the user input device 17 may be configured to provide one or more user selectable parts 51 to a user. Each of the user selectable parts 51 may be associated with different functions of the apparatus 1 so that the function is performed in response to actuation of the user selectable part. The function associated with the user selectable part 51 may be dependent upon the mode of operation and/or the context of the apparatus 1.

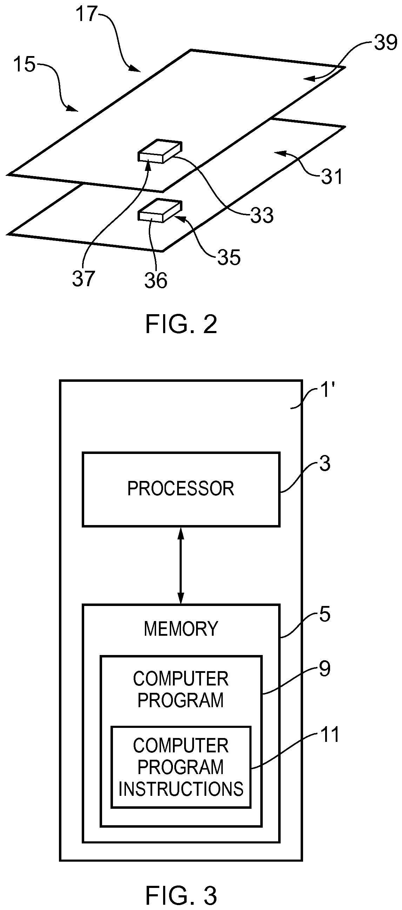

In embodiments of the invention the user selectable parts 51 may be provided with different tactile qualities. For example, in some embodiments of the invention the user selectable parts 51 may be provided at different heights. The height of the user selectable part 51 relative to the rest of the user input device 17 may be dependent upon a characteristic of the function associated with the user selectable part. The relative height of the user selectable parts 51 may change as the mode of operation and/or context of the apparatus 1 changes. The relative height of a user selectable part 51 may be higher than the rest of the user input device 17 or lower than the rest of the user input device 17. The difference in the relative height of the user selectable part 51 is such that it may be felt by the user via the sense of touch. The difference in the relative heights may be of the order of several mm. An example of a user input device 17 configured to provide user selectable parts 51 at different relative heights is illustrated in more detail in Fig. 2.

In other embodiments of the invention the tactile quality of the user selectable part 51 may be the texture. The user input device 17 may be configured so that some of the user selectable parts 51 have a rougher texture than the rest of the user input device 17. In other embodiments of the invention the user selectable parts 51 may have a smoother texture. The user can feel the difference in texture using their sense of touch.

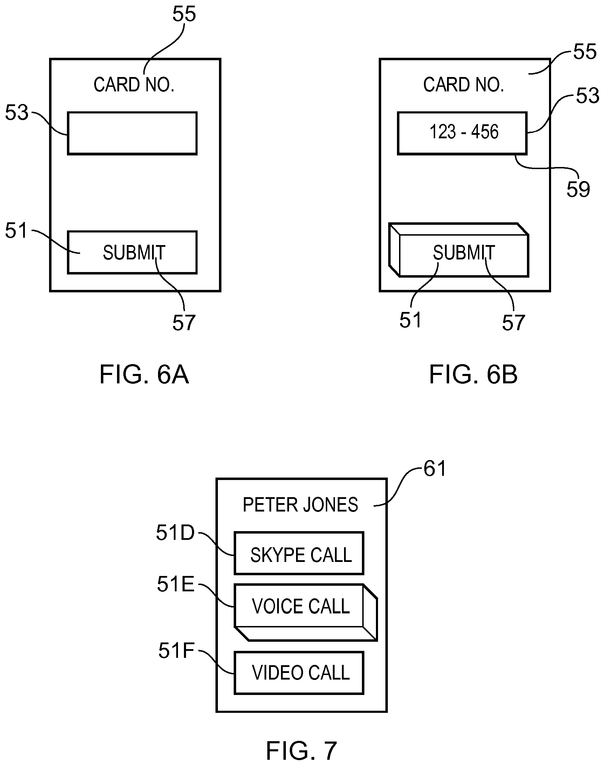

The display 15 may comprise any means which enables information to be displayed to a user of the apparatus 1. The information may correspond to information which has been input by the user via the user input device 17, information which is stored in the one or more memories 5 or information which has been received by apparatus 1. Graphical user interfaces 59, 61 as illustrated in Figs 6A, 6B and 7 may also be displayed on the display 15.

In some embodiments of the invention the user input device 17 and the display 15 may be combined to provide a touch sensitive display which both enables information to be displayed to a user and enables a user to make user inputs.

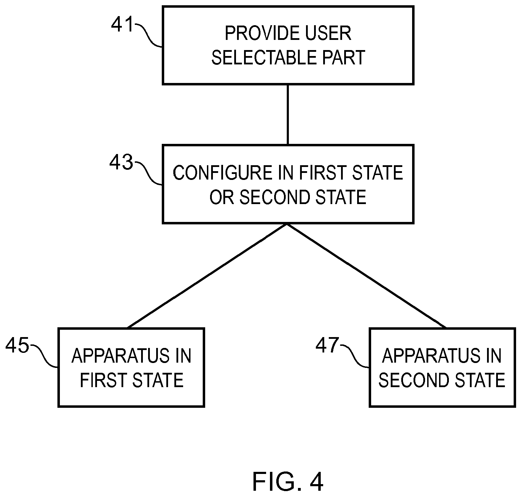

The at least one memory 5 stores a computer program code 9 comprising computer program instructions 11 that control the operation of the apparatus 1 when loaded into the at least one processor 3. The computer program instructions 11 provide the logic and routines that enable the apparatus 1 to perform the methods illustrated in Fig. 4. The at least one processor 3 by reading the at least one memory 5 is able to load and execute the computer program 9.

The computer program instructions 11 may provide computer readable program means configured to control the apparatus 1. The program instructions 11 may provide, when loaded into the controller 4; means for providing a user selectable part 51 of a user input device 17 of the apparatus 1; means for configuring the apparatus 1 in either a first state or a second state wherein, in the first state the user selectable part 51 is associated with a first function, having a first characteristic, so that the first function is performed in response to actuation of the user selectable part 51 and in the second state the user selectable part 51 is not associated with the first function so that the first function is not performed in response to the actuation of the user selectable part 51; and means for controlling the tactile quality of the user selectable part 51 with respect to the rest of the user input device so that the user selectable part 51 is provided with a first tactile quality when the apparatus 1 is in the first state and a second tactile quality when the apparatus 1 is in the second state wherein the tactile quality is indicative of the first characteristic of the first function.

The computer program code 9 may arrive at the apparatus 1 via any suitable delivery mechanism 21. The delivery mechanism 21 may be, for example, a computer-readable storage medium, a computer program product 23, a memory device, a record medium such as a CD-ROM or DVD, an article of manufacture that tangibly embodies the computer program code 9. The delivery mechanism may be a signal configured to reliably transfer the computer program code 9. The apparatus 1 may propagate or transmit the computer program code 9 as a computer data signal.

Although the memory 5 is illustrated as a single component it may be implemented as one or more separate components some or all of which may be integrated/removable and/or may provide permanent/semi-permanent/ dynamic/cached storage.

References to 'computer-readable storage medium', 'computer program product', 'tangibly embodied computer program' etc. or a 'controller', 'computer', 'processor' etc. should be understood to encompass not only computers having different architectures such as single/multi- processor architectures and sequential (e.g. Von Neumann)/parallel architectures but also specialized circuits such as field-programmable gate arrays (FPGA), application integration specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

Fig. 2 illustrates a user input device 17 according to an exemplary embodiment of the invention. The user input device 17 is configured to provide one or more user selectable parts 51 having different tactile qualities. In this exemplary embodiment at least one of the user selectable parts 51 is provided at a different relative height to the rest of the user input device 17. In this particular embodiment the user input device 17 comprises a touch sensitive display 15.

The touch sensitive display 15 comprises a flexible surface layer 39 overlaying an electroactive polymer (EAP) layer 31. The flexible surface layer 39 may comprise part of the outer surface of the apparatus 1. The flexible surface layer 39 may be actuated by a user. The actuation may comprise a user touching the flexible surface layer 39 with a device such as a finger or a stylus.

The electroactive polymer (EAP) layer 31 is provided underneath the flexible surface layer 39. The electroactive polymer may comprise any material which changes shape when a voltage is applied to it. The EAP layer 31 may be configured to provide localized changes in topology. That is, the EAP layer 31 may be configured so that a first portion of the EAP layer 31 may be raised or lowered with respect to the other portions of the EAP layer 31. The EAP layer 31 may be provided as a grid of EAP elements. The voltage across the EAP layer 31 may be controlled by the controller 4 thereby enabling the controller 4 to control the topology of the EAP layer 31. The controller 4 may control when the topology of the EAP layer 31 is changed.

The EAP layer 31 is positioned underneath the flexible surface layer 39 so that any change in the topology of the EAP layer 31 causes a corresponding change in the topology of the flexible surface layer 39.

In the embodiment illustrated in Fig. 2 a voltage has been applied to a first portion 35 of the EAP layer 31. This has caused the first portion 35 to become raised with respect to the rest of the EAP layer 31 so that the first portion 35 comprises a projection 36. The projection 36 in the first portion 35 of the EAP layer 31 also deforms the flexible surface layer 39 so that a corresponding projection 37 is provided in a first portion 33 of the flexible surface layer 39 overlaying the first portion 35 of the EAP layer 31. The projection provides the first portion 33 of the touch sensitive display 15 at a different relative height to the rest of the touch sensitive display 15. A user selectable part 51 may be displayed in the first portion 33 so that the user selectable part 51 is provided at a higher level than the rest of the user input device 17.

In the illustrated embodiment the EAP layer 31 provides a user selectable part 51 at a higher level than the rest of the user input device 17. It is to be appreciated that in other embodiments of the invention the user selectable part 51 could be provided at a lower level by controlling the EAP layer 31 to provide an indentation rather than a projection or to provide a change in the surface texture.

Fig. 3 illustrates an apparatus 1' according to another embodiment of the invention. The apparatus 1' illustrated in Fig. 3 may be a chip or a chip-set. The apparatus 1' comprises at least one processor 3 and at least one memory 5 as described above in relation to Fig. 1.

A method of controlling the apparatus 1, according to embodiments of the invention, is illustrated schematically in Fig 4.

At block 41 a user selectable part 51 is provided. The user selectable part 51 may comprise any part of a user input device 13 which may be actuated and in response to the actuation provide a control signal to the controller 4. A plurality of user selectable parts 51 may be provided simultaneously. The user selectable parts 51 may comprise portions of a touch sensitive display 15 which may be actuated by a user. In other embodiments of the invention the user selectable parts 51 may comprise a key or a plurality of keys in a key pad.

At block 43 the apparatus 1 is configured either in a first state or a second state. The first and second states may be any states in which the apparatus 1 is operable to perform functions. For example, in embodiments of the invention where the apparatus 1 is a mobile telephone the states may be a state in which the user may make or receive a telephone call or access a communications network such as the internet.

In the first state the user selectable part 51 is associated with a first function so that the first function is performed in response to actuation of the user selectable part 51. In the second state the user selectable part 51 is not associated with the first function so that the first function is not performed in response to actuation of the user selectable part 51. In some embodiments of the invention, when the apparatus 1 is configured in the second state the user selectable part 51 may be associated with a second function, different to the first function, so that the second function is performed in response to actuation of the user selectable part 41. Alternatively, in the second state the user selectable part 51 might not be associated with any function so that no function is performed in response to actuation of the user selectable part 51.

The apparatus 1 may be switched between the first and second states. The apparatus 1 may be switched between the first and second states in response to a user input. For example a user may select a first mode of operation in which the first function is available or a second mode of operation in which the first function is not available by selecting an item from a menu. Alternatively the user may input information which enables a first function to be performed. This may enable the apparatus 1 to switch between the two states as it might not be possible for the first function to be performed without the input information. For example a user may input a telephone number so that a telephone call may be made or they may input information into a field on a webpage which enables a transaction to be authorized.

In some embodiments of the invention the apparatus 1 may be switched between the first and second states without any input from the user of the apparatus 1. For example the apparatus 1 may receive an incoming call or message. In embodiments of the invention where the apparatus 1 is a portable or a handheld apparatus 1 the apparatus 1 may move from an area where access to a communications network is not available to an area where access to a communications network is available. In embodiments of the invention where the apparatus 1 is configured for enabling a message service such as instant messaging the function may be messaging a specific user of the messaging service. This function may only be available when the other user is online or has logged on to the service.

At block 45 the apparatus 1 has been configured in the first state so that the user selectable part is associated with the first function. The controller 4 determines that the apparatus 1 is in the first state and also that the user selectable part is associated with the first function. For example the controller 4 may determine that a function which comprises committing to a transaction is available. The controller 4 controls the user interface to control a tactile quality of the user selectable part 51 with respect to the rest of the user input device 17 so that the user selectable part 51 is provided with a different tactile quality relative to the rest of the user input device.

The tactile quality of the user input part 51 is indicative of a characteristic of the first function. For example, in some embodiments of the invention the function associated with the user input part 51 may comprise committing to a transaction which cannot easily be reversed, for example the function may comprise authorising a payment, sending a message such as an email, deleting content from the one or more memories 5 or transferring content to a removable medium. In such embodiments it is important that the user does not inadvertently actuate the user input part 51 and so the user input part 51 may be provided at a lower height or with a rougher texture than the rest of the user input device 17. This not only makes the user input part 51 feel different to the rest of the user input device 17 but it may also make the user input part 51 more difficult to actuate.

In other embodiments of the invention it may be advantageous to make the user input part 51 easier to actuate. In such embodiments the user input part 51 may be provided at a higher level than the rest of the user input device 17. For example, the characteristic which determines the relative height of the user input part 51 may be the probability that the function will be selected. If the user input part is associated with a function which has a high probability of being selected it may be provided at a higher level than the rest of the user input device 17. In some embodiments of the invention, if the user input part 51 is associated with a function which has a low probability of being selected it may be provided at a lower level than the rest of the user input device 17. The probability that a function will be selected may be determined based on the previous use of the apparatus or previous actions of the user.

In other embodiments of the invention the characteristic which determines the tactile quality of the user input part 51 may be that the function has become available. As mentioned above, the function may have become available because of information which has been input by the user or because access to a communications network has become available. The change in tactile quality of the user input part 51 when the apparatus 1 is configured in the first state may provide an indication to the user that the function has become available.

In embodiments of the invention where the user interface 13 comprises a touch sensitive display 15 with an EAP layer 31, as illustrated in Fig. 2, the relative height of the user input part 51 may be controlled by controlling the local topology of the EAP layer 31. The controller 4 may control the voltage across the EAP layer 31 to change the localized topology of the EAP layer 31 and flexible surface layer 39. The change in the topology may comprise a projection 37 as illustrated in Fig. 2 or an indentation depending upon the characteristic of the function associated with the user input part 51.

At block 47 the apparatus 1 has been configured in the second state so that the user selectable part 51 is not associated with the first function. The controller 4 determines that the apparatus 1 is in the second state and controls the EAP layer 31 so that the user selectable part 51 is provided with a second tactile quality relative to the rest of the user input device 17. The second tactile quality is different to the first tactile quality so that there is a change in the tactile quality of the user selectable part 51 when the apparatus 1 switches between the two states. In embodiments of the invention where the tactile quality is the height of the user selectable part 51 the second height may be the same level or substantially the same level as the rest of the user input device 17.

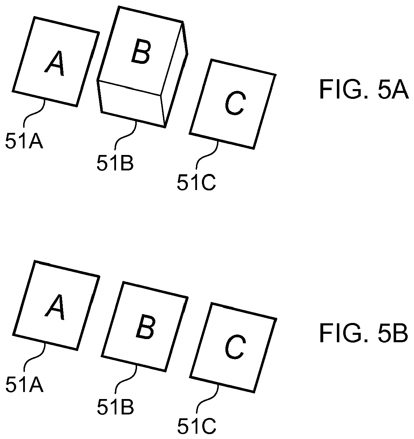

Figs. 5A and 5B illustrate a plurality of user selectable parts according to embodiments of the invention. The user selectable parts 51A, 51B, 51C may be provided a touch sensitive display 15 with an EAP layer 31 as illustrated in Fig. 2.

Fig. 5A illustrates an embodiment of the invention in a first state. In the embodiment illustrated in Fig. 5A three user selectable parts 51A, 51B, 51C are provided. The user selectable parts 51A, 51B, 51C are three distinct regions on a touch sensitive display 15. One of the user selectable parts 51B is associated with a first function so that the first function is performed in response to the actuation of the user selectable part 51B. The other user selectable parts 51A, 51C are not associated with the first function but may be associated with other, different functions.

The user selectable part 51B is provided at a higher level than the other user selectable parts 51A, 51C. The height of the user selectable part 51B enables a user to distinguish the user selectable part 51B from the other user selectable parts 51A, 51C using their sense of touch. The height of the user selectable part 51B provides an indication of a characteristic of the function associated with the user selectable part 51B.

When the apparatus 1 is switched between the first state and the second state the controller 4 may control the voltage across the EAP layer 31 to change the topology of the EAP layer 31 and the flexible surface layer 39.

Fig. 5B illustrates the embodiment of the invention in a second state. In the embodiment illustrated in Fig. 5B the user selectable part 51B is no longer associated with the first function. The user may have switched the apparatus 1 between the states by making a user input or by moving the apparatus 1 to an area where the first function is no longer available.

As the user selectable part 51B is no longer associated with the first function the user selectable part 51B is no longer provided at the first height. In the illustrated embodiment the user selectable part 51B is now provided at the same height as the other user selectable parts 51A, 51C. The controller 4 controls the voltage across the EAP layer 31 so that the flexible surface layer 39 is substantially flat with no projections or indentations which would be felt by the user.

Figs. 6A and 6B illustrate a graphical user interface 55 according to another embodiment of the invention. The graphical user interface 55 may be displayed on a touch sensitive display 15 as illustrated in Fig. 2. The graphical user interface 55 enables a user to authorize a payment by submitting payment details including a card number. In the embodiment illustrated in Figs. 6A and 6B the user switches from the first state to the second state.

In Fig. 6A a user selectable part 51 and a user input field 53 are provided. The user input field 53 enables a user to input information. In this particular embodiment the information comprises payment details including the number of card such as a bank card or credit card.

The user selectable part 51 comprises a label 57 indicating that the user selectable part 51 has to be actuated to submit the payment details and authorize of the payment.

However, in Fig. 6A no information has been input in the user input field 53 and so the function of authorizing the payment cannot be performed. Therefore the user selectable part 51 is provided at the same level as the rest of the touch sensitive display 15. The user cannot distinguish between the user input part 51 and the rest of the touch sensitive display 15 by touch.

In Fig. 6B the user has now input information comprising a card number into the user input field 53. As the card number has been input the function of authorizing a payment can now be performed. This has changed the state of the apparatus 1 from a state in which the user selectable part 51 is not associated with a function to state in which the user selectable part 51 is associated with a function.

The controller has controlled the apparatus 1 to change the height of the user selectable part 51 relative to the rest of the touch sensitive display 15. This enables the user to feel the user selectable part 51 and distinguish between the user selectable part 51 and the rest of the touch sensitive display 15 using their sense of touch. The change in height of the user input part 51 as the apparatus switches between the states provides an indication to the user that the function of authorizing the payment has become available.

In the embodiment illustrated in Fig. 6B the user selectable part 51 is provided at a lower level than the rest of the touch sensitive display 15. This may make the user selectable part 51 more difficult to actuate and so reduces the chances of the user inadvertently actuating the user selectable part 51 and committing to a transaction which cannot easily be reversed. In other embodiments of the invention the user input part 51 may be provided at a higher level.

Fig. 7 illustrates another graphical user interface 61 according to another exemplary embodiment of the invention. This graphical user interface 61 may also be displayed on a touch sensitive display as illustrated in Fig. 2. The graphical user interface 61 enables a user to establish a communication link with a contact. In this particular embodiment the contact is "Peter Jones".

The graphical user interface comprises a plurality of user selectable parts 51D, 51E, 51F. Each of the user selectable parts 51D, 51E, 51F enables a different type of communication link to be established and so each of the user selectable parts 51D, 51E, 51F is associated with a different function. The first user selectable part 51D is associated with the function of making a skype call, the second user selectable part 51E is associated with the function of making a voice call and the third user selectable part 51F is associated with the function of making a video call.

In the embodiment illustrated in Fig. 7 the height of the user selectable part 51D, 51E, 51F is determined by the probability that the user will select the particular function. The probability that a user will select a function may be determined by previous actions of the user.

In Fig. 7 the most commonly selected function is the voice call function. As the voice call function has a higher probability of being selected the user selectable part 51E associated with the voice call function is provided at a higher level than the other user selectable parts 51D, 51F. This makes it easier for the user to determine which of the user selectable parts is associated with the voice call function and also makes it easier for the user to actuate this particular user selectable part.

Embodiments of the invention provide the advantage that they provide a user interface which is simple and convenient for a user to use. By controlling the height of the user selectable parts in dependence upon a characteristic of the function associated with the user selectable part this provides a mechanism which enables a user to easily distinguish between different user selectable parts. It may also provide an indication to a user when a function becomes available. It may also be used to make some user selectable parts more difficult to actuate to reduce the chance of a user inadvertently committing to a function which cannot easily be reversed. It may also be used to make some user selectable parts easier to actuate, for example by making the most commonly used functions more prominent in the user interface.

In some embodiments of the invention the apparatus 1 may be switched between the first and second states by navigating through a menu. The user selectable parts 51 may comprise menu options. The relative height of the user selectable parts may depend upon whether or not there is another menu level below the displayed menu level. For example where the menu structure comprises a plurality of folders, if there are one or more files or sub-folders within a folder the user selectable part 51 may be provided at a first level whereas if there are no files or sub-folders within the folder the user selectable part 51 may be provided at a second different level. This provides the user with a clear indication of whether or not there are any files stored in a folder without having to access the folder. It may also make the folders with the most files easier for the user to access as these folders may be more prominent in the user interface.

The blocks illustrated in the Fig. 4 may represent steps in a method and/or sections of code in the computer program 9. The illustration of a particular order to the blocks does not necessarily imply that there is a required or preferred order for the blocks and the order and arrangement of the block may be varied. Furthermore, it may be possible for some steps to be omitted.

Although embodiments of the present invention have been described in the preceding paragraphs with reference to various examples, it should be appreciated that modifications to the examples given can be made without departing from the scope of the invention as claimed. For example in the illustrated embodiments the user input device comprises a touch sensitive display. It is to be appreciated that in other embodiments of the invention the user input device may comprise one or more keys in a key pad and the relative heights of the keys may be changed.

Also in the above described embodiment the localized projections or indentations are provided by an EAP layer. In other embodiments of the invention the localized projections may be provided by any other suitable means such as a mechanical or fluid pumping system or a piezo electric transducer.

In some embodiments of the invention the different tactile qualities of the user selectable parts may be provided by providing a stimulus such as an electrical impulse to a user. In such embodiments this may be achieved without making a physical modification to the surface of the display. For example, an electric current may be provided to the display to change the electrical charge of the display. The user may be able to sense this through their skin and so sense different tactile qualities.

The change in the tactile quality of the user selectable part may be used to provide an indication to the user of more than one change of state or context of the apparatus. For example, in the embodiment described above in relation to Figs. 6A and 6B the tactile quality of the user selectable part changes when information is entered into the user input field. After the user has actuated the user selectable part the user may be provided with another graphical user interface which requires that the user checks that the information has been input correctly. The tactile quality of the user selectable part may change again once the user has confirmed that information is correct.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

## Claims

1. An apparatus (1) comprising:
means for providing a user selectable part (51) of a user input device (17) of the apparatus (1), the user selectable part (51) being a part of the user input device (17) which may be actuated and in response to the actuation provides a control signal to a controller (4);
means for configuring the apparatus in either a first state or a second state wherein, in the first state the user selectable part (51) is associated with a first function, having a first characteristic, so that the first function is performed in response to actuation of the user selectable part (51), and wherein in the second state the user selectable part (51) is associated with a second function, different to the first function, so that the second function is performed in response to actuation of the user selectable part (51); and
means for controlling a tactile quality of the user selectable part (51) with respect to the rest of the user input device (17) so that the user selectable part (51) is provided with a first tactile quality when the apparatus (1) is in the first state and a second different tactile quality when the apparatus (1) is in the second state wherein the first tactile quality is indicative of the first characteristic of the first function, and wherein the user selectable part (51) is selectable with the first tactile quality in the first state and the user selectable part (51) is selectable with the second tactile quality in the second state.

2. An apparatus (1) as claimed in claim 1 wherein tactile quality is the height of the user selectable part (51) with respect to the rest of the user input device (17) so that the user selectable part is provided at a first relative height when the apparatus is in the first state and a second relative height when the apparatus is in the second state wherein the relative height is indicative of the first characteristic of the first function.

3. An apparatus (1) as claimed in any preceding claim wherein the first relative height is higher than the rest of the user input device (17).

4. An apparatus (1) as claimed in any of claims 1 to 2 wherein the first relative height is lower than the rest of the user input device (17).

5. An apparatus (1) as claimed in claim 1 wherein the tactile quality is the texture of the user selectable part (51).

6. An apparatus (1) as claimed in any preceding claim wherein the first characteristic is that the function is available, or is that the function comprises committing to a transaction, or is the probability that the function will be selected.

7. An apparatus (1) as claimed in claim 6 wherein committing to a transaction comprises performing an action which cannot easily be reversed.

8. An apparatus (1) as claimed in claim 6 wherein the tactile quality of the user selectable part (51) is proportional to the probability that the function will be selected.

9. An apparatus (1) as claimed in any preceding claim wherein the first characteristic associated with the first function is dependent upon the context of the apparatus (1).

10. An apparatus (1) as claimed in any preceding claim wherein a plurality of user selectable parts (51) are provided and each of the user selectable parts (51) are provided with different tactile qualities depending on the characteristics of the functions associated with the user selectable parts (51).

11. An apparatus (1) as claimed in any preceding claim wherein the change in the tactile quality of a part of the user input device (17) is provided by a change in the topology of an electroactive polymer (35, 31).

12. A portable hand held device comprising the apparatus (1) as claimed in any preceding claim.

13. A method comprising:
providing a user selectable part (51) of a user input device of an apparatus (1), the user selectable part (51) being a part of the user input device (17) which may be actuated and in response to the actuation provides a control signal to a controller (4);
configuring the apparatus (1) in either a first state or a second state wherein, in the first state the user selectable part (51) is associated with a first function, having a first characteristic, so that the first function is performed in response to actuation of the user selectable part (51), and wherein in the second state the user selectable part (51) is associated with a second function, different to the first function, so that the second function is performed in response to actuation of the user selectable part (51); and
controlling a tactile quality of the user selectable part (51) with respect to the rest of the user input device (17) so that the user selectable part (51) is provided with a first tactile quality when the apparatus (1) is in the first state and a second different tactile quality when the apparatus (1) is in the second state wherein the first tactile quality is indicative of the first characteristic of the first function, and wherein the user selectable part (51) is selectable with the first tactile quality in the first state and the user selectable part (51) is selectable with the second tactile quality in the second state.

14. A method as claimed in claim 13 wherein tactile quality is the height of the user selectable part (51) with respect to the rest of the user input device (17) so that the user selectable part (51) is provided at a first relative height when the apparatus (1) is in the first state and a second relative height when the apparatus (1) is in the second state wherein the relative height is indicative of the first characteristic of the first function.

15. Computer program instructions (11) for causing an apparatus (1) to perform the method of any of claims 13 to 14.

## Patentansprüche

1. Einrichtung (1), die Folgendes umfasst:
Mittel zum Bereitstellen eines benutzerauswählbaren Teils (51) einer Benutzereingabevorrichtung (17) der Einrichtung (1), wobei das benutzerauswählbare Teil (51) ein Teil der Benutzereingabevorrichtung (17) ist, das betätigt werden kann und in Reaktion auf die Betätigung einer Steuerung (4) ein Steuersignal bereitstellt;
Mittel zum Auslegen der Einrichtung entweder für einen ersten Zustand oder einen zweiten Zustand, wobei das benutzerauswählbare Teil (51) im ersten Zustand mit einer ersten Funktion verknüpft ist, die eine erste Eigenschaft aufweist, derart, dass die erste Funktion in Reaktion auf die Betätigung des benutzerauswählbaren Teils (51) durchgeführt wird, und wobei das benutzerauswählbare Teil (51) im zweiten Zustand mit einer zweiten Funktion verknüpft ist, die sich von der ersten Funktion unterscheidet, derart, dass die zweite Funktion in Reaktion auf die Betätigung des benutzerauswählbaren Teils (51) durchgeführt wird; und
Mittel zum Steuern einer taktilen Qualität des benutzerauswählbaren Teils (51) mit Bezug auf den Rest der Benutzereingabevorrichtung (17), derart, dass das benutzerauswählbare Teil (51) mit einer ersten taktilen Qualität versehen ist, wenn die Einrichtung (1) im ersten Zustand ist, und einer zweiten taktilen Qualität, wenn die Einrichtung (1) im zweiten Zustand ist, wobei die erste taktile Qualität die Eigenschaft der ersten Funktion anzeigt und wobei das benutzerauswählbare Teil (51) im ersten Zustand mit der ersten taktilen Qualität auswählbar ist und das benutzerauswählbare Teil (51) im zweiten Zustand mit der zweiten taktilen Qualität auswählbar ist.

2. Einrichtung (1) nach Anspruch 1, wobei die taktile Qualität die Höhe des benutzerauswählbaren Teils (51) mit Bezug auf den Rest der Benutzereingabevorrichtung (17) ist, derart, dass das benutzerauswählbare Teil in einer ersten relativen Höhe bereitgestellt ist, wenn die Einrichtung im ersten Zustand ist, und einer zweiten relativen Höhe, wenn die Einrichtung im zweiten Zustand ist, wobei die relative Höhe die erste Eigenschaft der ersten Funktion anzeigt.

3. Einrichtung (1) nach einem der vorhergehenden Ansprüche, wobei die erste relative Höhe höher ist als der Rest der Benutzereingabevorrichtung (17).

4. Einrichtung (1) nach einem der Ansprüche 1 bis 2, wobei die erste relative Höhe niedriger ist als der Rest der Benutzereingabevorrichtung (17).

5. Einrichtung (1) nach Anspruch 1, wobei die taktile Qualität die Textur des benutzerauswählbaren Teils (51) ist.

6. Einrichtung (1) nach einem der vorhergehenden Ansprüche, wobei die erste Eigenschaft die ist, dass die Funktion verfügbar ist, oder die ist, dass die Funktion das Binden an eine Transaktion umfasst, oder die Wahrscheinlichkeit ist, dass die Funktion ausgewählt wird.

7. Einrichtung (1) nach Anspruch 6, wobei das Binden an eine Transaktion das Durchführen einer Aktion, die nicht auf einfache Weise rückgängig gemacht werden kann, umfasst.

8. Einrichtung (1) nach Anspruch 6, wobei sich die taktile Qualität des benutzerauswählbaren Teils (51) proportional zur Wahrscheinlichkeit, dass die Funktion ausgewählt wird, verhält.

9. Einrichtung (1) nach einem der vorhergehenden Ansprüche, wobei die erste Eigenschaft, die mit der ersten Funktion verknüpft ist, vom Kontext der Einrichtung (1) abhängig ist.

10. Einrichtung (1) nach einem der vorhergehenden Ansprüche, wobei eine Vielzahl von benutzerauswählbaren Teilen (51) bereitgestellt sind und jedes der benutzerauswählbaren Teile (51) in Abhängigkeit von den Eigenschaften der Funktionen, die mit den benutzerauswählbaren Teilen (51) verknüpft sind, mit unterschiedlichen taktilen Qualitäten versehen sind.

11. Einrichtung (1) nach einem der vorhergehenden Ansprüche, wobei die Änderung der taktilen Qualität eines Teils der Benutzereingabevorrichtung (17) durch eine Änderung der Topologie eines elektroaktiven Polymers (35, 31) bereitgestellt wird.

12. Tragbare Handvorrichtung, die die Einrichtung (1) nach einem der vorhergehenden Ansprüche umfasst.

13. Verfahren, das Folgendes umfasst:
Bereitstellen eines benutzerauswählbaren Teils (51) einer Benutzereingabevorrichtung einer Einrichtung (1), wobei das benutzerauswählbare Teil (51) ein Teil der Benutzereingabevorrichtung (17) ist, das betätigt werden kann und in Reaktion auf die Betätigung einer Steuerung (4) ein Steuersignal bereitstellt;
Auslegen der Einrichtung (1) entweder für einen ersten Zustand oder einen zweiten Zustand, wobei das benutzerauswählbare Teil (51) im ersten Zustand mit einer ersten Funktion verknüpft ist, die eine erste Eigenschaft aufweist, derart, dass die erste Funktion in Reaktion auf die Betätigung des benutzerauswählbaren Teils (51) durchgeführt wird, und wobei das benutzerauswählbare Teil (51) im zweiten Zustand mit einer zweiten Funktion verknüpft ist, die sich von der ersten Funktion unterscheidet, derart, dass die zweite Funktion in Reaktion auf die Betätigung des benutzerauswählbaren Teils (51) durchgeführt wird; und
Steuern einer taktilen Qualität des benutzerauswählbaren Teils (51) mit Bezug auf den Rest der Benutzereingabevorrichtung (17), derart, dass das benutzerauswählbare Teil (51) mit einer ersten taktilen Qualität versehen ist, wenn die Einrichtung (1) im ersten Zustand ist, und einer zweiten taktilen Qualität, wenn die Einrichtung (1) im zweiten Zustand ist, wobei die erste taktile Qualität die Eigenschaft der ersten Funktion anzeigt und wobei das benutzerauswählbare Teil (51) im ersten Zustand mit der ersten taktilen Qualität auswählbar ist und das benutzerauswählbare Teil (51) im zweiten Zustand mit der zweiten taktilen Qualität auswählbar ist.

14. Verfahren nach Anspruch 13, wobei die taktile Qualität die Höhe des benutzerauswählbaren Teils (51) mit Bezug auf den Rest der Benutzereingabevorrichtung (17) ist, derart, dass das benutzerauswählbare Teil (51) in einer ersten relativen Höhe bereitgestellt ist, wenn die Einrichtung (1) im ersten Zustand ist, und einer zweiten relativen Höhe, wenn die Einrichtung (1) im zweiten Zustand ist, wobei die relative Höhe die erste Eigenschaft der ersten Funktion anzeigt.

15. Computerprogrammanweisungen (11) zum Veranlassen, dass eine Einrichtung (1) das Verfahren nach einem der Ansprüche 13 bis 14 durchführt.

## Revendications

1. Appareil (1) comprenant :
des moyens pour fournir une partie apte à être sélectionnée par un utilisateur (51) d'un dispositif d'entrée utilisateur (17) de l'appareil (1), la partie apte à être sélectionnée par l'utilisateur (51) étant une partie du dispositif d'entrée utilisateur (17) qui peut être actionnée et en réponse à l'actionnement fournit un signal de commande à un contrôleur (4) ;
des moyens pour configurer l'appareil soit dans un premier état soit dans un second état dans lequel, dans le premier état, la partie apte à être sélectionnée par l'utilisateur (51) est associée à une première fonction, ayant une première caractéristique, de sorte que la première fonction soit réalisée en réponse à l'actionnement de la partie apte à être sélectionnée par l'utilisateur (51), et dans lequel dans le second état, la partie apte à être sélectionnée par l'utilisateur (51) est associée à une seconde fonction, différente de la première fonction, de sorte que la seconde fonction soit réalisée en réponse à l'actionnement de la partie apte à être sélectionnée par l'utilisateur (51) ; et
des moyens pour contrôler une qualité tactile de la partie apte à être sélectionnée par l'utilisateur (51) par rapport au reste du dispositif d'entrée utilisateur (17) de sorte que la partie apte à être sélectionnée par l'utilisateur (51) soit munie d'une première qualité tactile lorsque l'appareil (1) est dans le premier état et d'une seconde qualité tactile différente lorsque l'appareil (1) est dans le second état dans lequel la première qualité tactile est indicative de la première caractéristique de la première fonction, et dans lequel la partie apte à être sélectionnée par l'utilisateur (51) est apte à être sélectionnée avec la première qualité tactile dans le premier état et la partie apte à être sélectionnée par l'utilisateur (51) est apte à être sélectionnée avec la seconde qualité tactile dans le second état.

2. Appareil (1) selon la revendication 1 dans lequel la qualité tactile est la hauteur de la partie apte à être sélectionnée par l'utilisateur (51) par rapport au reste du dispositif d'entrée utilisateur (17) de sorte que la partie apte à être sélectionnée par l'utilisateur soit ménagée à une première hauteur relative lorsque l'appareil est dans le premier état et une seconde hauteur relative lorsque l'appareil est dans le second état dans lequel la hauteur relative est indicative de la première caractéristique de la première fonction.

3. Appareil (1) selon une quelconque revendication précédente dans lequel la première hauteur relative est plus haute que le reste du dispositif d'entrée utilisateur (17).

4. Appareil (1) selon l'une quelconque des revendications 1 à 2 dans lequel la première hauteur relative est plus basse que le reste du dispositif d'entrée utilisateur (17) .

5. Appareil (1) selon la revendication 1 dans lequel la qualité tactile est la texture de la partie apte à être sélectionnée par l'utilisateur (51).

6. Appareil (1) selon une quelconque revendication précédente dans lequel la première caractéristique est que la fonction est disponible, ou est que la fonction comprend un engagement dans une transaction, ou est la probabilité que la fonction sera sélectionnée.

7. Appareil (1) selon la revendication 6 dans lequel l'engagement dans une transaction comprend la réalisation d'une action sur laquelle il n'est pas facile de revenir.

8. Appareil (1) selon la revendication 6 dans lequel la qualité tactile de la partie apte à être sélectionnée par l'utilisateur (51) est proportionnelle à la probabilité que la fonction sera sélectionnée.

9. Appareil (1) selon une quelconque revendication précédente dans lequel la première caractéristique associée à la première fonction est dépendante du contexte de l'appareil (1).

10. Appareil (1) selon une quelconque revendication précédente dans lequel une pluralité de parties aptes à être sélectionnées par l'utilisateur (51) sont ménagées et chacune des parties aptes à être sélectionnées par l'utilisateur (51) sont munies de différentes qualités tactiles en dépendance des caractéristiques des fonctions associées aux parties aptes à être sélectionnées par l'utilisateur (51).

11. Appareil (1) selon une quelconque revendication précédente dans lequel le changement de la qualité tactile d'une partie du dispositif d'entrée utilisateur (17) est fournie par un changement de la topologie d'un polymère électroactif (35, 31).

12. Dispositif portable tenu à la main comprenant l'appareil (1) selon une quelconque revendication précédente.

13. Procédé comprenant :
la fourniture d'une partie apte à être sélectionnée par un utilisateur (51) d'un dispositif d'entrée utilisateur d'un appareil (1), la partie apte à être sélectionnée par l'utilisateur (51) étant une partie du dispositif d'entrée utilisateur (17) qui peut être actionnée et en réponse à l'actionnement fournit un signal de commande à un contrôleur (4) ;
la configuration de l'appareil (1) soit dans un premier état soit dans un second état dans lequel, dans le premier état, la partie apte à être sélectionnée par l'utilisateur (51) est associée à une première fonction, ayant une première caractéristique, de sorte que la première fonction soit réalisée en réponse à l'actionnement de la partie apte à être sélectionnée par l'utilisateur (51), et dans lequel dans le second état, la partie apte à être sélectionnée par l'utilisateur (51) est associée à une seconde fonction, différente de la première fonction, de sorte que la seconde fonction soit réalisée en réponse à l'actionnement de la partie apte à être sélectionnée par l'utilisateur (51) ; et
le contrôle d'une qualité tactile de la partie apte à être sélectionnée par l'utilisateur (51) par rapport au reste du dispositif d'entrée utilisateur (17) de sorte que la partie apte à être sélectionnée par l'utilisateur (51) soit munie d'une première qualité tactile lorsque l'appareil (1) est dans le premier état et d'une seconde qualité tactile différente lorsque l'appareil (1) est dans le second état dans lequel la première qualité tactile est indicative de la première caractéristique de la première fonction, et dans lequel la partie apte à être sélectionnée par l'utilisateur (51) est apte à être sélectionnée avec la première qualité tactile dans le premier état et la partie apte à être sélectionnée par l'utilisateur (51) est apte à être sélectionnée avec la seconde qualité tactile dans le second état.

14. Procédé selon la revendication 13 dans lequel la qualité tactile est la hauteur de la partie apte à être sélectionnée par l'utilisateur (51) par rapport au reste du dispositif d'entrée utilisateur (17) de sorte que la partie apte à être sélectionnée par l'utilisateur (51) soit ménagée à une première hauteur relative lorsque l'appareil (1) est dans le premier état et une seconde hauteur relative lorsque l'appareil (1) est dans le second état dans lequel la hauteur relative est indicative de la première caractéristique de la première fonction.

15. Instructions de programme d'ordinateur (11) pour amener un appareil (1) à réaliser le procédé selon l'une quelconque des revendications 13 à 14.
